(19) Europäisches Patentamt
European Patent Office
Office européen des brevets

(11) **EP 1 643 263 B1**

(12) **EUROPÄISCHE PATENTSCHRIFT**

(45) Veröffentlichungstag und Bekanntmachung des Hinweises auf die Patenterteilung:
**16.11.2016 Patentblatt 2016/46**

(51) Int Cl.:
***G01S 1/04*** *(2006.01)*

(21) Anmeldenummer: **05090260.0**

(22) Anmeldetag: **16.09.2005**

(54) **Anordnung und Verfahren zur Ermittlung eines Atmosphärenzustandes**

Device and method for determining an atmosphere condition

Disposition et procédé de détermination d'un état d'atmosphère

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.10.2004 DE 102004048327**
**09.08.2005 DE 102005038391**

(43) Veröffentlichungstag der Anmeldung:
**05.04.2006 Patentblatt 2006/14**

(73) Patentinhaber: **Deutsches Zentrum für Luft- und Raumfahrt e.V.**
**51147 Köln (DE)**

(72) Erfinder:
 • **Jakowski, Norbert, Dr.**
  **17235 Neustrelitz (DE)**
 • **Borg, Erik**
  **16247 Joachimsthal (DE)**
 • **Stankov, Stanimir, Dr.**
  **17235 Neustrelitz (DE)**

 • **Klähn, Dietmar, Dr.**
  **17235 Neustrelitz (DE)**

(74) Vertreter: **Patentanwälte Bressel und Partner mbB**
**Potsdamer Platz 10**
**10785 Berlin (DE)**

(56) Entgegenhaltungen:
**US-A- 5 428 358     US-A- 5 828 336**

 • **KHATTATOV B ET AL: "Ionospheric corrections from a prototype operational assimilation and forecast system" POSITION LOCATION AND NAVIGATION SYMPOSIUM, 2004. PLANS 2004 MONTEREY, CA, USA 26-29 APRIL 2004, PISCATAWAY, NJ, USA,IEEE, US, 26. April 2004 (2004-04-26), Seiten 518-526, XP010768916 ISBN: 0-7803-8416-4**
 • **BRADLEY P A ET AL: "Perspectives on updated @?oF2 maps for IRI" ADVANCES IN SPACE RESEARCH, PERGAMON, OXFORD, GB, Bd. 34, Nr. 9, 11. September 2004 (2004-09-11), Seiten 2067-2074, XP004878568 ISSN: 0273-1177**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Anordnung zur Ermittlung eines Zustandes einer Planeten-Atmosphäre, oder eines Teils der Atmosphäre, insbesondere der Ionosphäre der Erde.

Die Ionosphäre der Erde hat wesentlichen Einfluss auf die Ausbreitung von

Funkwellen, d. h. auch auf die Übertragung von Informationen mittels elektromagnetischer Strahlung wie sie beispielsweise in der Telekommunikation und in der satellitengestützten Navigation üblich ist.

Die Veröffentlichung Khattatov B et al.: "Ionospheric corrections from a prototype operational assimilation and forecast system", Position Location and Navigation, Symposium, 2004. Plans 2004 Monterey, CA, USA 26-29, April 2004, Piscataway, NJ, USA, IEEE, US, 26. April 2004 (2004-04-26), Seiten 518-526, XP010768916, ISBN: 0-7803-8416-4 beschreibt ein Modell der Ionosphäre, das in Echtzeit Ionen-und Elektronendichten berechnet.

US 5,428,358 beschreibt ein Verfahren zum Bestimmen des lokalen totalen Elektroneninhalts (TEC) der Ionosphäre von seiner räumlichen/zeitlichen Variation unter Verwendung eines ionosphärischen GPS-Empfängers. Zur Berechnung des vertikalen TEC wird eine Reihenentwicklung angegeben.

US 5,828,336 beschreibt ein Verfahren und eine Vorrichtung zum Bereitstellen von differenziellen GPS-Positionsdaten.

Es ist eine Aufgabe der vorliegenden Erfindung, ein Verfahren und eine Anordnung anzugeben, die es ermöglichen, die Genauigkeit und Zuverlässigkeit von Kommunikations- und Navigationssystemen zu erhöhen, die auf der Übertragung von Informationen mittels Radiowellen in planetaren Atmosphären beruhen.

Es wird ein Verfahren zur Charakterisierung eines Zustandes einer Planeten-Atmosphäre (oder eines Teils der Atmosphäre) vorgeschlagen gemäß Anspruch 1. Bei dem Teil der Atmosphäre handelt es sich insbesondere um die Ionosphäre der Erde. Bei dem Verfahren

- werden Werte eines Ionisationszustandes, insbesondere einer Elektranendichte und/oder eines Elektroneninhaltes, in der Atmosphäre oder in dem Teil der Atmosphäre in Abhängigkeit einer Ortsvariablen und in Abhängigkeit einer Zeitvariablen ermittelt (insbesondere durch Messung),

- wird für die Atmosphäre oder den Teil der Atmosphäre zumindest eine Kenngröße ermittelt und

- wird die Kenngröße aus den für die Atmosphäre oder den Teil der Atmosphäre ermittelten Werten des Ionisationszustandes bestimmt.

Die Kenngröße weist eine der folgend aufgelisteten Größen auf: räumliche und/oder zeitliche Ableitungen einer physikalischen Zustandsgröße der Atmosphäre, insbesondere der Elektronendichte und/oder des Elektroneninhalts, Abweichung, insbesondere Standardabweichung, von einem Mittelwert oder Referenzwert einer Zustandsgröße der Atmosphäre.

Durch die Kenngröße kann folglich der Zustand der Atmosphäre oder der Zustand des Teils der Atmosphäre charakterisiert werden, d.h. die Kenngröße beschreibt aussagekräftig und für diverse mögliche Anwendungen geeignet den Zustand der Atmosphäre. Die Kenngröße kann daher auch als charakteristische Kenngröße (Parameter) oder als Index bezeichnet werden. Insbesondere ist es möglich, dass ein

Wert der Kenngröße bestimmt wird, der zu einem Zeitpunkt oder in einem Zeitraum (auch zukünftig) charakteristisch für den Zustand in der gesamten Atmosphäre oder in dem gesamten Teil der Atmosphäre ist.

Bei der Bestimmung der Kenngröße wird vorzugsweise jeweils aus einer Mehrzahl der Werte des Ionisationszustandes ein einziger, für ein Teilgebiet der Atmosphäre und/oder für einen Zeitraum charakteristischer Wert der Kenngröße bestimmt. Beispielsweise können Werte des Ionisationszustandes über das Teilgebiet und/oder über den Zeitraum gemittelt werden. In einem einfachen Fall ist somit ein Mittelwert der Zustandvariablen, die den Ionisationszustand beschreibt, der Wert der Kenngröße, der für das Teilgebiet und/oder den Zeitraum gültig ist.

Bei einer bevorzugten Weiterbildung des Verfahrens wird für eine Vielzahl verschiedener Teilgebiete der Atmosphäre und/oder für eine Vielzahl von Zeiträumen jeweils wie in den Absätzen zuvor beschrieben ein Wert der Kenngröße bestimmt. Es ist somit z. B. möglich, eine Karte (bzw. äquivalente Datensätze) der Ionosphäre oder eines Teils davon anzufertigen, wobei die Karte jeweils für die Ausbreitung von Radiowellen aussagekräftige Werte enthält.

Die Erfindung beinhaltet insbesondere ein physikalisch basiertes numerisches Verfahren zur Erfassung des räumlich-zeitlichen Störungsverhaltens der Ionosphäre, das eine Erhöhung der Genauigkeit und Zuverlässigkeit von Kommunikations- und Navigationssystemen zulässt.

Informationen und damit Messdaten über den Zustand der Ionosphäre können aus satellitengestützten Messungen und aus Messungen an Bodenstationen gewonnen werden. Die insbesondere aus verschiedenen Beobachtungsverfahren abgeleiteten und in der Regel inhomogen in Raum und Zeit verteilten Messdaten allein erlauben jedoch noch nicht eine effektive Beschreibung der Ionosphäre.

Gemäß einer vorteilhaften Ausgestaltung der Erfindung werden daher spezifische, das Systemverhalten der Ionosphäre beschreibende Kenngrößen abgeleitet, die vorteilhaft in nachfolgenden Anwendungen auch quantitativ genutzt werden können.

Eine Möglichkeit einer solchen nachfolgenden Anwendung besteht in einer Prognose der Kenngröße, d. h. einer Vorhersage für die Zukunft. Es ist somit z. B. möglich, die Kenngröße aus den ermittelten Werten des Ionisationszustandes für einen in der Zukunft liegenden Zeitpunkt oder Zeitraum vorauszusagen.

Die Erfindung kann insbesondere der automatischen Ableitung physikalisch begründeter Ionosphären-Kenngrößen dienen, die in sich optional anschließenden quantitativen Auswerteverfahren oder industriellen Anwendungen weiter verarbeitet werden können. Bereits eine einzige abgeleitete Kenngröße kann als Eingangsgröße und/oder Eingangsinformation für eine insbesondere automatische Datenverarbeitung verwendet werden, z. B. in technischen Systemen zur Abschätzung signifikanter Einflussfaktoren infolge von Ionosphärenstörungen. Dementsprechend können die Kenngrößen (insbesondere als kompakte Information) effektiv in Modelle der Ionosphäre, aktuelle Zustandsanalysen als auch in Vorhersagen eingehen.

Das insbesondere vollautomatisch ausgeführte Verfahren soll universell einsetzbar sein. Es können alle für die Ableitung der verdichteten Information notwendigen Informationen aus satelliten- und/oder bodengestützen Messungen gewonnen werden.

Bevorzugte Zustandsvariablen des Ionisationszustandes sind die Elektronendichte und der Elektroneninhalt. Diese Zustandsvariablen können z. B. durch Auswertung von Radiowellen, insbesondere der Laufzeit und/oder der Trägerphase von Radiowellen, bestimmt werden. Ein derartiges Verfahren wird z. B. in der am Ende der Beschreibung zitierten Veröffentlichung von N. Jakowski aus dem Jahr 1996 beschrieben.

Eine effektive Beschreibung der Atmosphäre kann insbesondere erreicht werden, indem räumliche und/oder zeitliche Ableitungen der Elektronendichte und/oder des Elektroneninhalts in definierten Gebieten (insbesondere Teilgebieten der Ionosphäre) gebildet werden und die daraus erhaltenen Informationen räumlich und/oder zeitlich geeignet verdichtet werden. Beispielsweise geschieht dies durch die Assimilation aller verfügbaren Ionosphärendaten aus boden- und/oder satellitengestützten Messnetzwerken und/oder lokalen in situ- Messungen in hinreichend genaue Ionosphärenmodelle zur Beschreibung des Elektroneninhalts (insbesondere zweidimensional) und/oder der Elektronendichte (dreidimensional). Eine Verdichtung der Informationen kann jedoch auch auf andere Weise erfolgen. Generell wird unter Verdichtung verstanden, dass die Datenmenge in räumlicher und/oder zeitlicher Hinsicht reduziert wird.

Ferner werden ein Verfahren gemäß Anspruch 1 und eine Anordnung gemäß Anspruch 11 zur Ermittlung eines Zustandes einer Planeten-Atmosphäre oder eines Teils der Atmosphäre vorgeschlagen, die eines oder eine beliebige Kombination der folgenden Merkmale aufweisen. Dabei wird unter einem Teil der Atmosphäre insbesondere eine Atmosphärenschicht oder wiederum ein Teil davon verstanden. Wenn im Folgenden von der Atmosphäre die Rede ist, wird insbesondere auch ein Teil der Atmosphäre darunter verstanden:

- es wird zumindest eine Kenngröße der Atmosphäre ermittelt,
- die Kenngröße soll eine Kenngröße eines physikalischen Zustandes der Atmosphäre sein,
- die Kenngröße kann einen einzigen Wert aufweisen, der einen Zustand eines Ortes der Atmosphäre, eines Teils der Atmosphäre (insbesondere eines Teils der Ionosphäre oder der gesamten Ionosphäre) oder der gesamten Atmosphäre beschreibt; insbesondere kann die Kenngröße einen Mittelwert über den Teil oder die Atmosphäre aufweisen; der Wert beschreibt insbesondere für einen Zeitpunkt oder Zeitraum den Zustand; der Wert kann z. B. ein zeitlicher Mittelwert oder ein Median sein oder ein für ein Zeitintervall typischer Wert sein,
- die Kenngröße kann aus einer als Ladungsträgerdichte bekannten räumlichen Verteilung von Ladungsträgern (insbesondere Elektronen) abgeleitet werden, wobei sich die Ladungsträger in der Atmosphäre (Plasma der Ionosphäre) befinden,
- die Kenngröße kann aus einem Gesamtinhalt der Ladungsträger in dem Teil der Atmosphäre und/oder der Atmosphäre abgeleitet werden.
- es können mehrere der Kenngrößen ermittelt werden und miteinander zu einer neuen Kenngröße kombiniert werden,
- die Kenngröße kann eine eindimensionale Kenngröße sein,
- die Kenngröße kann die räumliche und/oder zeitliche Änderung (insbesondere auf der Basis von örtlichen und/oder zeitlichen partiellen Ableitungen) einer Zustandsgröße der Atmosphäre mit physikalischer Bedeutung beschreiben oder daraus ermittelt werden.

Eine entsprechende Anordnung ist ausgestaltet, zumindest eine der genannten Funktionen zu erfüllen. Dabei kann die Anordnung z. B. durch einen Computer oder durch ein Computersystem und/oder durch ein entsprechendes Computerprogramm realisiert werden.

Es ist denkbar, Kenngrößen zu ermitteln, die zwar indirekt vom Ionosphärenzustand abhängig sind (jedoch nicht aus gemessenen Werten eines Ionisationszustandes der Atmosphäre bestimmt werden), deren Eigenschaften aber zusätzlich von messtechnischen Faktoren bei der Datenerfassung (z. B. Messung von Intensität und Phase von Radiosignalen) und daher von den Eigenschaften des genutzten technischen Systems abhängen. Diese Kenngrößen sind damit nur für eine bestimmte Klasse von Anwendungen gültig. Wegen der dispersiven Natur der Ionosphäre sind diese gemessenen Kenngrößen zudem noch frequenzabhängig. Ein Beispiel für eine derartige Kenngröße ist der so genannte Szintillationsindex, der aus einer zeitlichen Schwankungsbreite eines Radiowellensignals bestimmt wird. Im Gegensatz dazu wird hier vorgeschlagen, die charakterisierende Kenngröße aus (insbesondere gemessenen) Werten des Ionisationszustandes der Atmosphäre zu bestimmen. Da es sich bei dem Ionisationszustand um einen physikalischen, also nur von der Natur und nicht von Messgeräten abhängigen Zustand handelt und da die Kenngröße aus dem Ionisationszustand abgeleitet wird, kann bei der Kenngröße gemäß der vorliegenden Erfindung auch von einer objektiven Kenngröße gesprochen werden. Die Kenngröße ist unabhängig von der Funktionsweise eines bestimmten Typs von Messgeräten.

Vorzugsweise liefert das Verfahren daher Zustandsparameter, die den momentanen Zustand der Atmosphäre, insbesondere der Ionosphäre beschreiben. Hierzu können Daten unterschiedlicher räumlicher Auflösung aus Datenbanken (z. B. mit gespeicherten Messdaten der Atmosphäre) oder in Echtzeit eingelesen und verarbeitet werden.

Zur Kompensation der Nachteile einer inhomogenen Datenverteilung ist es möglich (und wird bevorzugt), eine Datenassimilation (Verschneidung von Daten mit einem Modell, hierauf wird noch näher eingegangen) durchzuführen. Die daraus gewonnenen oder auf andere Weise gewonnenen Informationen zum Zustand der Ionosphäre (insbesondere lokal, regional, global: siehe unten) können so verdichtet werden, dass komplexe Zusammenhänge auf eindimensionale Parameter

(Kenngrößen) reduziert werden. Unter "lokal" oder einem entsprechendem Gebiet kann insbesondere ein Teil der Erdatmosphäre verstanden werden, der eine Breiten-und Längenabmessung von jeweils mindestens 10 km hat. Unter "regional" oder einem entsprechendem Gebiet kann insbesondere ein Teil der Erdatmosphäre verstanden werden, der eine Breiten- und Längenabmessung von jeweils mindestens 1000 km hat.

Die Datenassimilation in ein Modell ist jedoch nicht die einzige Möglichkeit. Zum Beispiel sind insbesondere bei hohem Datenaufkommen auch tomografische Lösungen ohne Modellunterstützung möglich.

Bei der Ermittlung der Werte des Ionisationszustandes (Rekonstruktion der räumlich-zeitlichen Verteilung der Ionisation) kann unterstützend ein physikalisches (z. B. empirisches oder theoretisches) Modell verwendet werden, das den Elektroneninhalt oder die Elektronendichte in der Atmosphäre oder in dem Teil der Atmosphäre beschreibt, wobei das Modell eine räumliche und zeitliche Diskretisierung der Atmosphäre oder des Teils der Atmosphäre nutzt, insbesondere ein Gitterpunktnetz aufweisen. Dabei entspricht diskreten Orten oder Teilvolumina des Modells jeweils ein Ort oder Volumenbereich in der Atmosphäre oder in dem Teil der Atmosphäre. Den Orten oder Teilvolumina wird jeweils ein aktueller oder zukünftiger Wert einer mit Hilfe des Modells rekonstruierten Größe, z. B. der Elektronendichte oder des Elektroneninhalts, zugeordnet.

Entsprechend dem oben vorgeschlagenen Verfahren wird eine Anordnung gemäß Anspruch 11 zur Charakterisierung eines Zustandes einer Planeten-Atmosphäre, oder eines Teils der Atmosphäre, insbesondere der Ionosphäre der Erde, vorgeschlagen, wobei die Anordnung Folgendes aufweist:

-    eine Zustands-Ermittlungseinrichtung, die ausgestaltet ist, Werte eines Ionisationszustandes, insbesondere einer Elektronendichte und/oder eines Elektroneninhaltes, in der Atmosphäre oder in dem Teil der Atmosphäre in Abhängigkeit einer Ortsvariablen und in Abhängigkeit einer Zeitvariablen zu ermitteln,
-    eine Kenngrößen-Bestimmungseinrichtung, die ausgestaltet ist, für die Atmosphäre oder den Teil der Atmosphäre zumindest eine Kenngröße zu bestimmen,
     wobei die Kenngröße aus den für die Atmosphäre oder für den Teil der Atmosphäre ermittelten Werten des Ionisationszustandes bestimmt wird.

Zur Erhöhung der Zuverlässigkeit und Genauigkeit können bei Ausgestaltungen der Anordnung und/oder des Verfahrens bestimmte Kenntnisse des räumlichen und zeitlichen Verhaltens der Atmosphäre, insbesondere der Ionosphäre verlangt werden. Wegen der Komplexität des Atmosphären-Verhaltens bietet sich die Nutzung von Atmosphären-Kenngrößen an, die in der Lage sind, systemkritische Eigenschaften schnell und hinreichend gut zu beschreiben. Die Ausbreitungseigenschaften der Radiowellen werden durch den Brechungsindex bestimmt. Dieser physikalische Parameter ist eine Hauptkenngröße, die sich entsprechend der im Brechungsindex beschriebenen Zusammenhänge auch durch andere physikalische Zustandsgrößen ersetzen lässt. So lässt sich der Brechungsindex des Ausbreitungsmediums Ionosphäre in erster Näherung auch durch die Plasmafrequenz oder die Elektronendichte darstellen, wobei die Frequenzabhängigkeit der Brechung zu berücksichtigen ist, d.h. der Brechungsindex variiert mit der Frequenz der Radiowellen. Das ist ein Umstand der die Verallgemeinerung einer Kenngröße erheblich einschränkt, bei fest vorgegebenen Frequenzen (wie z. B. im Fall von GPS) aber hingenommen werden kann. Hingegen ist die Elektronendichte oder dessen Integral längs des Strahlenweges (TEC) vorteilhafterweise ein objektiver Zustandsparameter des Ausbreitungsmediums. Die für Signalstörungen verantwortlichen ionosphärischen Irregularitäten lassen sich in erster Näherung außer durch das Niveau der Elektronendichte auch durch dessen zeitliche und räumliche Gradienten ausdrücken. Höhere Ableitungen sind möglich und ebenfalls als Kenngröße geeignet. Auch Zustandsparameter wie die Plasmatemperatur oder die Driftgeschwindigkeit des Plasmas sind Zustandsparameter des ionosphärischen Plasmas, machen sich bei der Brechung der Radiowellen aber nur indirekt bemerkbar, sodass sie wenig vorteilhaft einsetzbar und außerdem noch schwierig zu messen sind. Grundsätzlich ist die räumliche Ausdehnung der Störungen zu berücksichtigen; deshalb kann je nach Anwendungsfall eine lokale, regionale oder globale Kenngröße vorteilhaft sein.

Insbesondere wird ein vollständig physikalisch begründeter Ansatz verwendet und es werden verdichtete Informationen zum räumlich-zeitlichen Verhalten der Ionosphäre genutzt. Die Informationen liegen z. B. in Form zumindest einer Kenngröße vor. Außerdem kann eine Qualitätskontrolle zur iterativen Verbesserung der Eingangsdaten durchgeführt werden. Vorzugsweise ist das Verfahren automatisiert. Unter der Verdichtung von Informationen wird die Reduktion der Informationen zu einer für den Atmosphärenzustand charakteristischen Aussage, im Extremfall bis zu einem einzigen Wert verstanden.

Das Verfahren kann ein Verfahren zur operationellen und automatischen Ableitung physikalischer Zustandsinformationen der Ionosphäre sein. Es soll die schnelle und automatische Verarbeitung großer Datenmengen zum Zustand der Ionosphäre und deren Komprimierung auf handhabbare Parameter zum aktuellen Zustand der Ionosphäre leisten können. In dem entsprechenden Verarbeitungsprozess können bodengestützte und/oder satellitengestützte Ionosphärenmessungen in einer unvollständig besetzten Raummatrix mit x Spalten und y Zeilen und z-Höhenniveaus verarbeitet werden.

Besonders bevorzugte Ausgestaltungen der Erfindung werden nun anhand von Ausführungsbeispielen beschrieben. Dabei wird Bezug auf die beigefügte Zeichnung genommen. Die einzelnen Figuren der Zeichnung zeigen:

Fig. 1          eine Anordnung zur Charakterisierung eines Zustandes einer Planeten-Atmosphäre bzw. ein Flussdiagramm, das einen entsprechenden Verfahrensablauf zeigt,

Fig. 2          eine schematische Darstellung von Möglichkeiten bei der Bestimmung von Kenngrößen,

Fig. 3          eine Darstellung verschiedener Typen von Kenngrößen und anderen Größen als Funktionen der Zeit,

Fig. 4          mehrere, durch kreisförmige Linien abgegrenzte Teilgebiete der Erd-Atmosphäre und darunter eine Karte eines Teils der nördlichen Hemisphäre der Erde mit dem Nordpol als zentraler Punkt der Karte und

Fig. 5a und Fig. 5b    ionosphärische Störungs-Kenngrößen im Vergleich mit einem zeitlich gemittelten (dreistündlich) geomagnetischen Aktivitätsparameter.

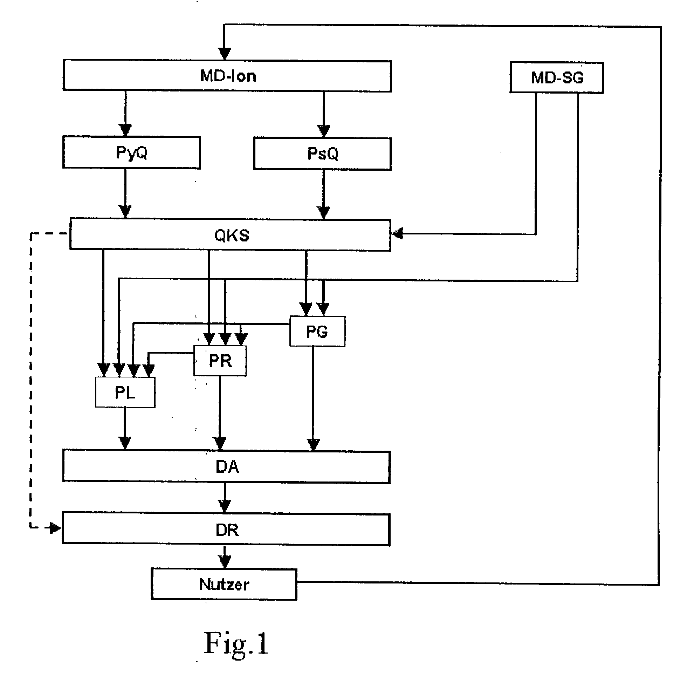

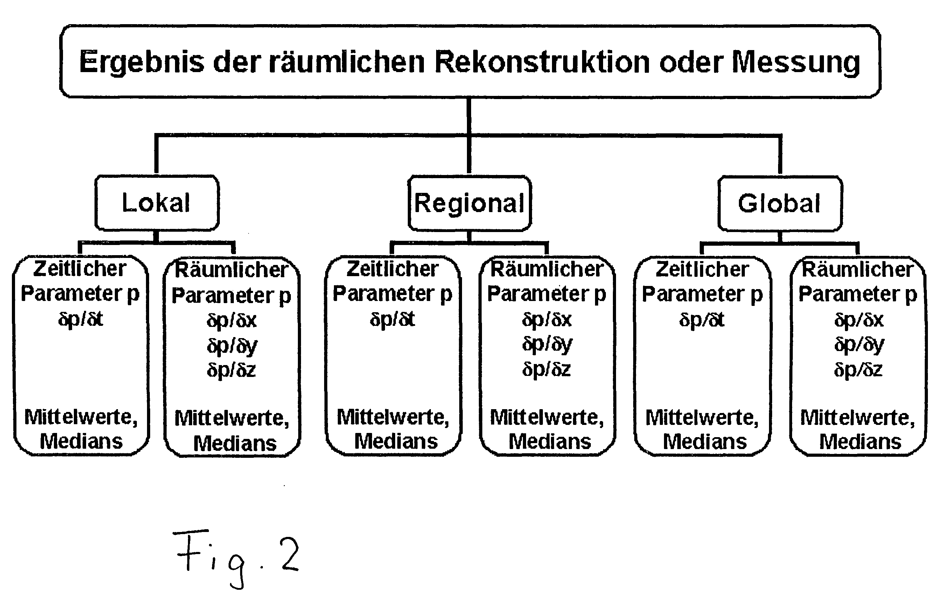

Fig. 1 kann als die Darstellung einer Anordnung oder als Flussdiagramm von Verfahrensschritten interpretiert werden. Die Anordnung zur Ausführung des Verfahrens kann verschiedene Teilprozessoren aufweisen, die (wie in Fig. 1 dargestellt) als Module miteinander verbunden werden, beispielsweise eines oder mehrere der folgenden Module, auf die noch näher eingegangen wird: Modul PyQ (Physikalische Qualitätskontrolle), Modul PsQ (Statistische Qualitätskontrolle), Modul QKS (Qualitätsverbesserungs-, Kalibrations- und Steuerungseinrichtung), verschiedene Module mit örtlich-zeitlichen Prozessoren (PL - Lokaler Prozessor, PR - regionaler Prozessor, PG - globaler Prozessor, siehe dazu auch Fig. 2), Modul zur Datenassimilation und ein Produktionsmodul (das Datenreduktionsmodul DR). Die Module können z. B. auf zwei unabhängige Datenressourcen zugreifen: Ressourcen mit Messdaten der Atmosphäre, insbesondere der Ionosphäre (MD-Ion) und mit solaren und/oder geomagnetischen Messdaten (MD-SG).

Außerdem ist in Fig. 1 ein Block dargestellt, der einen Nutzer der Anordnung bzw. des Verfahrens repräsentiert. Der Nutzer erhält Ergebnisse von Modul DR, kann aber auch Eingangsdaten liefern. Eingangsdaten können insbesondere auch von GPS-Diensten geliefert werden.

Die folgende Beschreibung bezieht sich nicht nur auf einen derartigen modularen Aufbau der Anordnung, sondern entsprechend auch auf die jeweilige Kombination der bei der Ausführung des Verfahrens ausgeführten Schritte. Wenn ein Modul optional vorgesehen ist, sind auch die entsprechenden Verfahrensschritte optional.

Die physikalische Qualitätskontrolle kann Irregularitäten der Signalstruktur (z.B. Phasensprünge) und/oder einer Messdatenreihe zur Detektierung fehlerhafter Messungen nutzen. Nach der Detektierung werden diese aus der weiteren Verarbeitung ausgeschlossen.

Hierzu können die Messgrößen in physikalische Größen umgewandelt werden (z.B. durch Umrechnung, Transformation, und/oder unter Verwendung von Look-Up-Tabellen) und auf Plausibilität, d.h. auf die Nicht-Überschreitung physikalisch determinierbarer Wertebereiche überprüft werden.

Zur statistischen Qualitätskontrolle (PsQ) können Zeitreihen analysiert werden, Ausreißer als Abweichungen aus statistischen Größen (z.B. Standardabweichungen) identifiziert werden und aus der weiteren Prozessierung ausgeschlossen werden. Dazu können statistische zeitliche und/oder räumliche Analysen durchgeführt werden.

Die Qualitätsverbesserung (Modul QKS) kann die entstandenen Fehlstellen detektieren und füllen (z.B. durch Interpolation). Um das Messwertrauschen zu minimieren, können Glättungsverfahren eingesetzt werden. Dazu können mathematische und statistische Filter eingesetzt werden.

Die Kalibration ist ein optionaler integrierter Verarbeitungsschritt, um sensorspezifischen Eigenheiten in den Messdaten eliminieren zu können. Dazu werden Modelle und Modellannahmen bzw. bekannte Systemparameter genutzt.

Des Weiteren ist das Modul in der Lage, auf die Daten derart zu reagieren, dass es die erforderlichen Hilfsparameter wie solare und/oder geomagnetische Daten aus Datenbanken (z. B. entsprechend einer Anforderung eines Benutzers, etwa einer vom Nutzer vorgegebenen räumlichen Auflösung) abrufen und für die weitere Verarbeitung zur Verfügung stellen kann. Sie dienen ferner dazu, ggf. die in diesem Modul genutzten Modelle (z.B. zur Kalibrierung) mit Eingangsinformationen (z.B. solarer Fluss) zu bedienen.

In dem Ausführungsbeispiel werden verschiedene räumliche und zeitliche Prozessoren PL, PR, PG verwendet. Es ist jedoch auch möglich, eine andere Anzahl von Prozessoren, insbesondere lediglich einen Prozessor zu verwenden. Die Prozessoren können jeweils eine gleiche Substruktur mit insbesondere jeweils zwei Submodulen aufweisen. Eines der Submodule betrifft den Fall, dass die Daten in einem folgenden Verarbeitungsschritt durch ein örtlich zweidimensionales Modell der Atmosphäre verarbeitet werden sollen. Das andere der Submodule betrifft den Fall, dass die Daten durch ein örtlich dreidimensionales Modell der Atmosphäre weiterverarbeitet werden sollen. Die Prozessoren (PL, PR, PG) dienen der Anpassung von Eingangsinformationen an die Grenzen eines Teilgebietes der Atmosphäre, wobei die Daten beschränkt auf dieses Teilgebiet verarbeitet werden sollen. Durch die Prozessoren kann das folgende Modul DA universell für jegliche Teilgebiete ausgestaltet sein. Alternativ kann aber auch eine Anordnung mit einem einzigen Modul verwendet werden, das die Modellrechnungen durchführt.

Insbesondere werden mit den Modellen der Elektroneninhalt oder die Elektronendichte in dem betrachteten Teilgebiet beschrieben. Das Modell kann Berechnungen auf Basis eines örtlich zweidimensionalen oder örtlich dreidimensionalen Gitterpunktnetzes aufweisen, wobei jedem Punkt in dem Netz ein Ort in der Atmosphäre und ein Wert der modellierten Größe (z. B. Elektronendichte) zugeordnet ist. Durch die Prozessoren (P) wird die Netzdichte des Berechnungsmodells auf die räumliche Ausdehnung des ein- bis dreidimensionalen Untersuchungsraumes angepasst (z.B. Gitterabstandsanpassung, Gebietsausdehnung).

Räumliche und zeitliche Prozessoren und entsprechende Modelle sind jedoch für die Ausführung der Erfindung nicht zwingend erforderlich. Zum Beispiel können bereits auf Basis von vorhandenen Messdaten ausreichende Informationen zur Ermittlung einer Kenngröße vorhanden sein. Diese Messdaten sind insbesondere räumlich strukturierte Daten, d. h. einzelne Messwerte sind jeweils einem Ort in der Atmosphäre zugeordnet. Aus diesem Grund führt in Fig. 1 ein Pfeil von Modul QKS direkt zu dem Modul DR.

Sollen dagegen aus örtlich lückenhaften oder inhomogen verteilten Messdaten zusätzliche Daten generiert werden, werden die Messdaten durch die Assimilation in eines der Modelle optimal verwertet. Insbesondere werden dabei bisher nicht besetzten Netzpunkten Werte (z. B. der Elektronendichte) zugeordnet.

Lokaler Prozessor PL:

Dieser Prozessor nutzt ein lokales Modell, das einen Teil der Atmosphäre, insbesondere Ionosphäre in geeigneter Weise beschreibt. Der Gültigkeitsbereich des Modells als auch dessen Randbedingungen sind lokal begrenzt (z.B. Bereich einer Messstation).

Seine Randzonenwerte können von einem regionalen Modell bestimmt werden (Einpassung eines lokalen in ein regionales Modell).

Im einfachsten Falle werden die Eingangsdaten den lokalen Gegebenheiten angepasst bzw. selektiert. Für die nachfolgende Assimilation muss dann ein externes Modell (z.B. Internationale Referenzionosphäre) verwendet werden oder die Rekonstruktion erfolgt über tomografische Ansätze modellfrei.

Regionaler Prozessor PR:

Dieser Prozessor nutzt ein regionales Modell, das einen Teil der Atmosphäre, insbesondere Ionosphäre in geeigneter Weise beschreibt. Der Gültigkeitsbereich des Modells als auch dessen Randbedingungen sind regional begrenzt (z. B. in einem örtlich dreidimensionalen Teil der Atmosphäre).

Seine Randzonenwerte können von einem globalen Modell bestimmt werden (Einpassung eines regionalen in ein globales Modell).

Im einfachsten Falle werden die Eingangsdaten nur den regionalen Gegebenheiten angepasst bzw. selektiert. Für die nachfolgende Assimilation muss dann ein externes Modell (z.B. Internationale Referenzionosphäre) verwendet werden oder die Rekonstruktion erfolgt über tomografische Ansätze modellfrei.

Globaler Prozessor PG:

Dieser Prozessor nutzt ein globales Modell, das eine vollständige Schicht der Atmosphäre, insbesondere die Ionosphäre in geeigneter Weise beschreibt. Der Gültigkeitsbereich des Modells als auch dessen Randbedingungen sind global begrenzt. Im einfachsten Falle werden die Eingangsdaten nur den globalen Gegebenheiten angepasst bzw. selektiert. Für die nachfolgende Assimilation muss dann ein externes Modell (z.B. Internationale Referenzionosphäre) verwendet werden oder die Rekonstruktion erfolgt über tomografische Ansätze modellfrei.

Datenassimilation DA:

Das Modul Datenassimilation zielt auf die ein- bis dreidimensionale Rekonstruktion einer Zustandsgröße (Kenngröße), insbesondere der Elektronendichte und/oder des Elektroneninhalts als homogene Funktion des Ortes in der Atmosphäre und/oder der Zeit. Hierzu werden die gemessenen Daten in dem oben aufgeführten und dem jeweiligen Anforderungsfall entsprechenden Modell assimiliert. Bei genügend großer Datendichte kann die Rekonstruktion z.B. über tomografische Verfahren,
vollkommen modellfrei erfolgen. Grundsätzlich können auch die aus der Meteorologie bekannten Verfahren der Rekonstruktion angewendet werden. Dies schließt auch die Möglichkeit der Vorhersage zukünftigen Ionosphärenverhaltens ein.

Datenreduktionsmodul DR:

Der aktuelle Ionisationszustand der Ionosphäre kann vorzugsweise durch eine der folgenden Zustandsgrößen beschrieben werden: die Elektronendichte $N_e$ und der Gesamtelektroneninhalt (TEC = Total Electron Content). TEC ist hier definiert als Integral der Elektronendichte $N_e$ entlang des Strahlenweges s von z. B. ca. 50 km Höhe (Beginn der Ionosphäre) bis zur Plasmapausenhöhe hpp.

$$TEC = \int_{50}^{hpp} N_e \cdot ds \qquad (1)$$

Bei satellitengestützten Messungen (z. B. Global Positioning System, d.h. GPS - Messungen) wird hpp durch die Satellitenhöhe $h_{sat}$ ersetzt.

Da Kenngrößen vorzugsweise zur einfachen und schnellen Beurteilung dynamischer Prozesse heran gezogen werden, bieten sich zur Ableitung verdichteter Informationen Kenngrößen der Ionosphäre an, die Informationen über örtliche und/oder zeitliche Veränderungen (insbesondere von Zustandsgrößen der Ionosphäre wie dem Gesamtelektroneninhalt TEC und der Elektronendichte Ne) geben. Diese Kenngrößen können je nach genutzter Datenbasis für das lokale, regionale oder globale Gebiet gelten. Fig. 2 gibt hierüber eine Übersicht. Vornehmlich werden die Kenngrößen so gewählt, dass sie bereits anwendungsnahe Informationen enthalten (z. B. ist der Entfernungsfehler bei GPS in erster Näherung direkt proportional zu TEC).

In der Fig. 2 werden Ausgangsgrößen (z. B. Zustandsgrößen) für die Kenngrößen als Parameter p oder abgeleitete Parameter p' bezeichnet. Bei dem Parameter p kann es sich z. B. um die oben definierten Zustandsgrößen Elektronendichte Ne und Gesamtelektroneninhalt TEC handeln. Bei dem abgeleiteten Parameter p' kann es sich z. B. um die Standardabweichung (mit $\sigma$ oder RMS bezeichnet) handeln oder um eine Differenz des Parameters p und einem Referenzparameterwert $p_{ref.}$ (z. B. der räumliche Mittelwert $\bar{p}$ des Parameters p über ein definiertes Gebiet). Als Eingangsinformation für die Ermittlung der zumindest einen Kenngröße stehen ein Ergebnis der "räumlichen Rekonstruktion", d. h. einer Modellberechnung (z. B. eines der oben genannten Modelle) und/oder Messdaten zur Verfügung. Die Eingangsinformationen weisen z. B. eine oder mehrere Zustandsgrößen als Funktion des Ortes und/oder der Zeit für einen betrachteten Bereich auf.

Generell gilt bei der vorliegenden Erfindung, dass aus einer Zustandsgröße (die als Funktion des Ortes in der Atmosphäre definiert sein kann, sodass ein Feld von Werten der Zustandsgrößen existiert) jeweils wieder eine weitere Zustandsgröße abgeleitet werden kann. Die Zustandsgröße kann auch selbst die Kenngröße sein. Es können somit die entsprechend Fig. 2 definierten Kenngrößen selbst wieder als Parameter p in das Schema eingehen. So kann die Standardabweichung ($\sigma$ oder RMS) von einem Mittelwert $\bar{p}$ sowohl als Funktion der Zeit an einem festen Ort in einem bestimmten Zeitfenster als auch als Funktion des Raumes zu einer festen Zeit in einem definierten Gebiet gebildet werden (N ist die Anzahl der Datenpunkte, z. B. in einem Zeitintervall $N_T$, oder in einer räumlichen Verteilung $N_R$, i ist der Laufindex, t ist die Zeit):

$$\sigma(t)^2 = \frac{1}{N_T - 1} \sum_{i=1}^{N_T} (p_i(t) - \overline{p(t)})^2 \qquad (2)$$

Die vorstehende Gleichung ist die Definition einer dynamischen Zustandscharakteristik an einem festen Ort oder über einer definierten Fläche.

$$\sigma(\lambda,\varphi)^2 = \frac{1}{N_R - 1} \sum_{i=1}^{N_R} (p_i(\lambda,\varphi) - \overline{p(\lambda,\varphi)})^2 \qquad (3)$$

Die vorstehende Gleichung (3) ist die Definition einer räumlichen Struktureigenschaft zu einer bestimmten Zeit oder in einem definierten Zeitintervall.

Auch weitere Verknüpfungen sind möglich wie z.B. die Summe der Quadrate der Standardabweichungen bezüglich der geografischen Länge $\lambda$ und bezüglich der geografischen Breite (bezeichnet mit $\phi$ oder $\Phi$) zu einer bestimmten Zeit t:

$$\sigma(\lambda,\varphi)^2 = \sigma(\lambda)^2 + \sigma(\varphi)^2 \qquad (4)$$

Zum Beispiel kann aus einer ersten partiellen Ableitung (nach dem Ort oder nach der Zeit) eines Parameters oder abgeleiteten Parameters eine weitere partielle Ableitung gebildet werden, z. B. die zweite partielle Ableitung nach derselben Ortskoordinate oder eine gemischte partielle Ableitung. Weitere, höhere partielle Ableitungen sind ebenfalls möglich. Partielle Ableitungen sind in Fig. 2 mit $\delta p/\delta j$ bezeichnet, wobei j z.B. für die Zeit t, eine der Ortskoordinaten x, y, z oder für eine anders definierte Ortskoordinate stehen kann. Im Fall von Fig. 2 sind die Ortskoordinaten x als die geografische Breite $\Phi$, y als die geografische Länge $\lambda$ und z als die Höhe über der Planetenoberfläche (z. B. normal null) definiert.

Außerdem ist das in Fig. 2 dargestellte Schema entsprechend den oben eingeführten Regionen "lokal", "regional" und "global" aufgefächert. Für alle Regionen kann nach der Zeit t und (soweit für das Gebiet, das auch ein örtlich eindimensionales Gebiet sein kann, definiert) nach jeder der Ortskoordinaten x, y, z abgeleitet werden.

Diese Kenngrößen können dann nachfolgend mit Hilfe geeigneter Verfahren, wie z.B. Bildung von Mittel- oder Medianwerten (in Fig. 2 angedeutet durch die Begriffe "Mittelwerte, Medians"), weiter zusammengefasst werden um für ein Zeitfenster oder ein räumliches Gebiet eine repräsentative Information zu erhalten. So können im Interesse einer möglichst effektiven Nutzung lokale, regionale und planetare Kenngrößen gebildet werden. Z. B. kann jeweils aus der Ableitung oder höheren Ableitung ein Mittelwert gebildet werden kann, z. B. die Standardabweichung gemäß einer der oben genannten Definitionen oder ein anderer Mittelwert.

Neben der Kenngröße sollte auch die Größe der zeitlichen Intervalle und für die Berechnungen betrachteten Raumgebiete möglichst zweckmäßig definiert werden. Eine Festlegung könnte auf internationaler Ebene in internationalen Standards oder Empfehlungen (z.B. ITU-R) erfolgen.

Fundamentale ionosphärische Parameter (die sowohl Zustandvariablen der Atmosphäre als auch mögliche Kenngrößen im Sinne der Erfindung sein können) sind z. B. die oben definierte TEC und die Elektronendichte. Daraus abgeleitete Kenngrößen sind z. B. die Standardabweichung eines fundamentalen ionosphärischen Parameters oder die Differenz eines solchen Parameters zu einem Referenzwert (z. B. zeitlicher Mittelwert, etwa über einen Monat gemittelt) des Parameters.

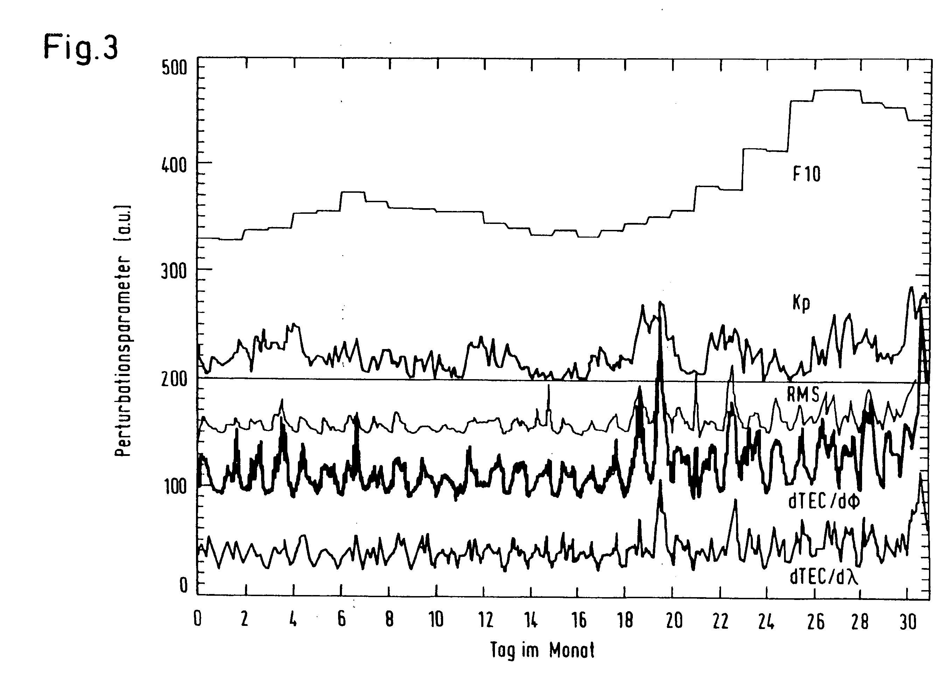

Die entsprechend dem in Fig. 2 dargestellten Schema berechneten Kenngrößen liefern insbesondere eine effektive Beschreibung der Störung von Funkwellen für den durch die Eingangsdaten beschriebenen Zustand der Ionosphäre (je nach dem Gebiet, das betrachtet wird, für lokale, regionale und/oder globale Anwendungen). Fig. 3 zeigt eine Darstellung verschiedener Typen von Kenngrößen die aus bodengestützten Messungen des europäischen GPS-Netzes des Internationalen GPS Service (IGS) abgeleitet wurden. Außerdem sind mit F10 die solare und mit Kp die geomagnetische Aktivität dargestellt. Bei allen Werten handelt es sich um Mittelwerte über Zeitintervalle von drei Stunden. Auf der vertikalen Achse des Diagramms, die allgemein formuliert mit "Perturbationsparameter" beschriftet ist, sind beliebige Einheiten aufgetragen (a.u. = arbitrary units). In Fig. 3 sind die Kenngrößen zeitliche Ableitung von TEC (maximaler Wert aus einem regionalen Gebiet, in diesem Fall Europa), mittlere Abweichung von dem für die Assimilation genutzten TEC- Hintergrundmodell NTCM1 (s. Anhang), Standardabweichung RMS vom TEC-Hintergrundmodell, Ableitung des TEC nach der geografischen Breite $\Phi$ (Maximalwert über Europa) und Ableitung des vertikalen TEC nach der geografischen Länge $\lambda$ (Maximalwert über Europa) dargestellt. In Analogie zu dem dreistündig gemittelten geomagnetischen Kp-Index wurden jeweils über Zeitintervalle von drei Stunden gemittelte Werte der genannten Kenngrößen ermittelt. Die insgesamt sieben Funktionen ("Zustandsparameter") sind als Funktion der Zeit (in Analogie zu Kp dreistündlich gemittelt) für den gesamten Monat März 1995 dargestellt.

Wie gezeigt werden konnte, gibt es wegen der intensiven Kopplung magnetosphärischer und ionosphärischer Prozesse eine signifikante Korrelation zwischen dem geomagnetischen und den ionosphärischen Parametern. Auffällig ist die tageszeitliche Periodizität der dargestellten Kenngrößen. Falls dies eine erhebliche Einschränkung zur Beurteilung der Störung darstellt, kann man mit den differentiellen Parametern $\Delta p_{abs} = p - p_{ref}$ oder $\Delta p(\%) = (p - p_{ref})/p_{ref} *100$ eine vom Tagesgang weitestgehend unabhängige Kenngröße definieren.

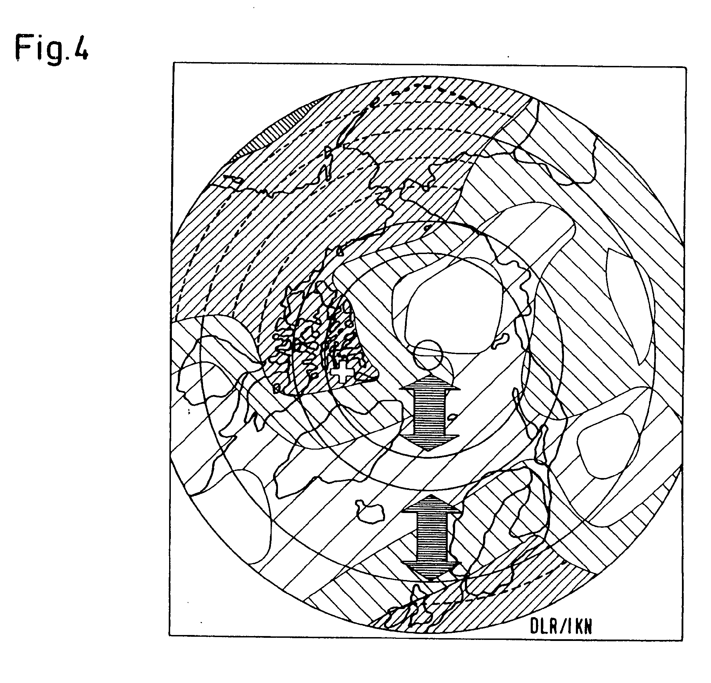

Im Folgenden wird ein Beispiel der Definition und Nutzung ionosphärischer Kenngrößen für präzise GNSS Anwendungen gegeben. Mit GNSS werden satellitengestützte globale Navigationssatellitensysteme wie z.B. GPS und Galileo bezeichnet. Fig. 4 zeigt um den Nordpol der Erde (im Mittelpunkt der Darstellung) Definitionsbereiche für zwei flächenbezogene ionosphärische Kenngrößen. In den dargestellten Zonen können verschiedene Kenngrößentypen entsprechend Fig. 2 definiert werden. Fig. 4 zeigt ein Beispiel für eine Zonenauswahl zur Definition des Wertebereiches flächenhafter Kenngrößen (mit Kreislinien markierte Ringe): u. a. die "Aurora Zone" (57,5 - 70,0 Grad nördlicher Breite) und die "Polarkappe" (75,0 - 87,5 Grad nördlicher Breite). Die Zone Polarkappe wird an ihrem Innenrand durch den kleinsten Kreis und an ihrem Außenrand durch den nächst größeren Kreis berandet. Die Zone "Aurora Zone" wird an ihrem Innenrand durch den wiederum nächst größeren Kreis und an ihrem Außenrand durch den größten Kreis berandet. Die Ausdehnung der Zonen in meridionaler Richtung der Darstellung von Fig. 4 ist durch jeweils einen breiten dunklen Doppelpfeil markiert. Gebiete mit ungefähr konstanten Werten einer ionosphärischen Kenngröße (hier der flächenbezogenen Elektronendichte) sind umrandet und entsprechend der Höhe des Wertes dichter, weniger dicht oder gar nicht schraffiert. Unter den Gebieten bzw. unter den Zonen erkennt man außerdem die Umrisse von Landgebieten, d. h. die Küstenlinien.

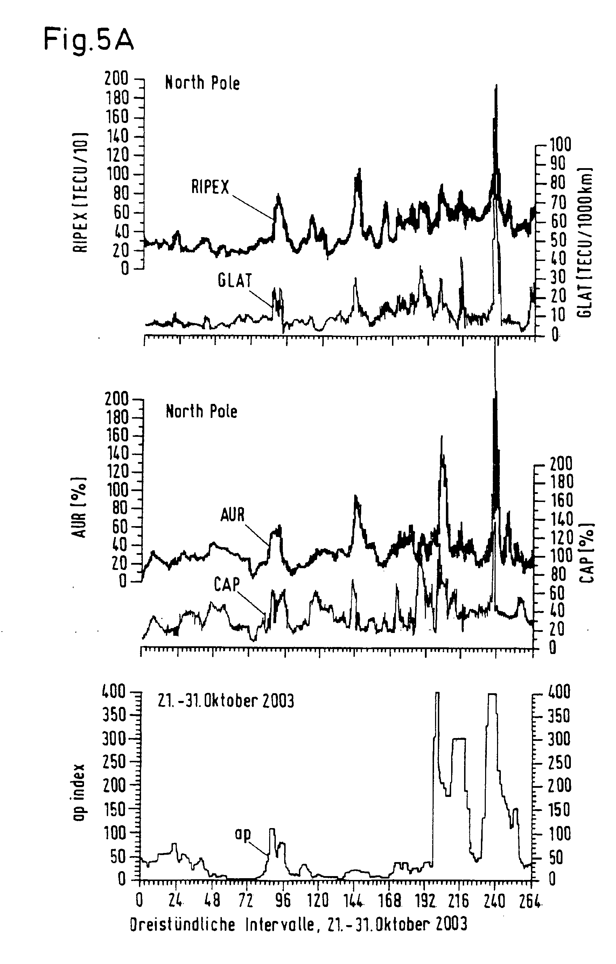

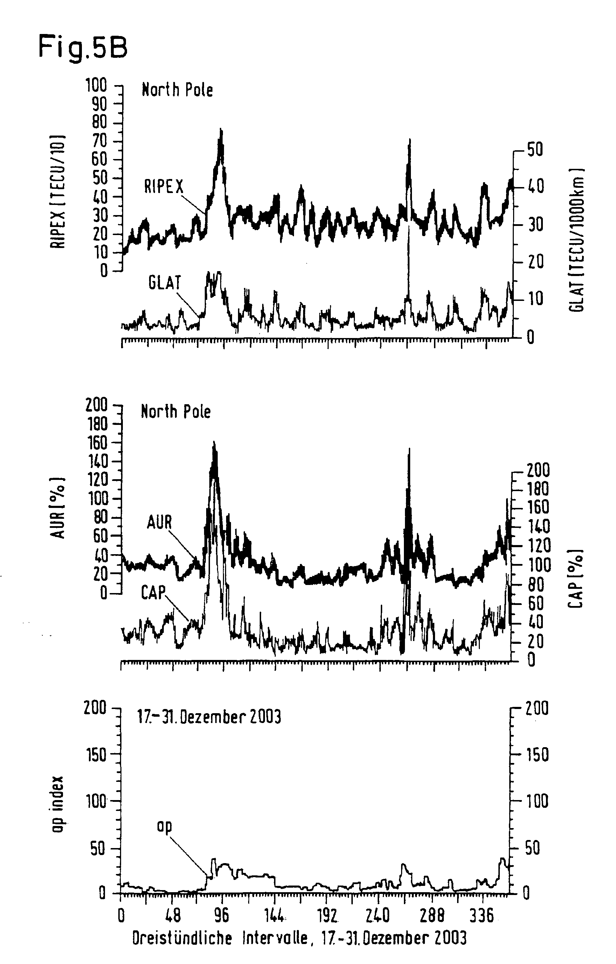

Die während starker ionosphärischer Störungen (insbesondere durch große räumliche und/oder zeitliche Variationen der Elektronendichte gekennzeichnet) im Oktober und Dezember 2003 für die beiden Polargebiete abgeleiteten Kenngrößen sind in Fig. 5a und Fig. 5b dargestellt. Die Abbildungen zeigen ionosphärische Störungs-Kenngrößen im Vergleich mit dem dreistündig gemittelten geomagnetischen Aktivitätsparameter ap während geomagnetisch gestörter Perioden im Oktober und Dezember 2003.

Fig. 5a und Fig. 5b zeigen insgesamt sechs Diagramme. Dabei sind in den in Fig. 5b übereinander dargestellten drei Diagrammen und in den in Fig. 5a übereinander dargestellten drei Diagrammen jeweils die gleichen Kenngrößen dargestellt, jedoch für einen unterschiedlichen Zeitraum. Der Zeitraum der drei Diagramme von Fig. 5a betrifft einen Zeitraum (horizontale Achse) vom 21. bis zum 31. Oktober 2003. Der Zeitraum der drei Diagramme in Fig. 5b betrifft einen Zeitraum (horizontale Achse) vom 17. bis zum 31. Dezember 2003.

In den beiden oberen Diagrammen von Fig. 5a und Fig. 5b ist eine Kenngröße RIPEX als Funktion der Zeit aufgetragen: RIPEX wird bei der Datenassimilation aus den Abweichungen der Messdaten von dem verwendeten Hintergrundmodell abgeleitet. RIPEX ist praktisch die Dispersion oder Standardabweichung aller auf die Vertikale transformierten und vorher in QKS kalibrierten TEC-Messungen von dem polaren Hintergrundmodell. Die Dispersion wird hier in 0,1 TECU (TEC unit TECU = $1 \times 10^{16}$ Elektronen / $m^2$) gemessen. Die unmittelbar darunter liegende Kurve GLAT zeigt das Maximum des nordwärts gerichteten Breitengradienten (TECU / 1000 km) über dem gesamten (örtlich zweidimensionalen) Gebiet ($\phi > 50\ °N$).

In den beiden mittleren Diagrammen sind entsprechend Fig. 3 flächenbezogene prozentuale Abweichungen von entsprechenden Referenzdaten (monatliche Medians) für die Aurora Zone "AUR" (jeweils obere Kurve) und das Gebiet Polarkappe "CAP" (jeweils untere Kurve) dargestellt. Die auf diese Weise tageszeitunabhängigen Kenngrößen für beide Gebiete sind sehr stark mit dem dreistündlichen geomagnetischen Aktivitätsindex ap korreliert. Der geomagnetische ap-Index ist in den unteren beiden Diagrammen dargestellt. Der Vergleich der neu definierten ionosphärischen Störungskenngrößen mit ap zeigt aber auch signifikante Unterschiede. Dies macht deutlich, dass in präzisen und sicherheitskritischen, vom Zustand der Ionosphäre abhängigen Anwendungen autonome Kenngrößen erforderlich sind. Erhöhte geomagnetische Kenngrößen wie ap signalisieren zwar eine erhöhte Wahrscheinlichkeit des Auftretens ionosphärischer Störungen, reichen aber nicht aus, um das Störungspotential der Ionosphäre hinreichend gut zu beschreiben.

Am 29. und 30. Oktober 2003 gab es für die Telekommunikation und für Navigationsanwendungen international signifikante Beeinträchtigungen des Funkverkehrs und auch von Navigations- und Vermessungsdiensten.

Durch den Vergleich mit einem Referenzdatensatz sind die Kenngrößen in den mittleren Diagrammen praktisch tageszeitunabhängig. Diese Unabhängigkeit kann zur Charakterisierung des physikalischen Störungszustandes vorteilhaft sein.

Der unterschiedliche Charakter dieser Kenngrößen ist offensichtlich. Bemerkenswert ist, dass trotz der geringeren geomagnetischen Aktivität im Dezember 2003 die prozentualen Kenngrößen AUR und CAP in den mittleren Diagrammen der beiden betrachteten Zeitintervalle in der Amplitude nicht sehr unterschiedlich sind. Das heißt, auch hier zeigt sich, dass ionosphärische Störungen durch geomagnetische Kenngrößen nur qualitativ beschrieben werden können. Spezifische ionosphärische Indizes sind zukünftig erforderlich.

Um eine bestmögliche Einschätzung der Situation für eine spezifische Anwendung zu bekommen, kann die Wahl des Kenngrößentyps von der konkreten Aufgabe abhängen. Bei geeigneter Wahl erhält man ein schnelles und aussagekräftiges Maß der beobachteten Störung, das dann in ionosphären-empfindlichen technischen Systemen zur Lagebeurteilung herangezogen werden kann.

Die erfindungsgemäße Anordnung kann Daten aus einer oder mehreren der folgenden Datenressourcen als Eingangsdaten verwenden (siehe dazu auch Fig. 1):

1.) eine Datenbank und/oder ein operationelles Datenbanknetz in dem ionosphärische Messdaten verfügbar sind (MD-ION): Für die Gewinnung einer operationellen und flächendeckenden Information vorteilhaft sind die aus der Messung von Ausbreitungsparametern von Radiowellen (z.B. Laufzeit) ableitbaren integralen Elektronendichten, z.B. aus Zwei-Frequenz GPS-Messungen. Alternativ oder zusätzlich: lokale in-situ-Messungen, alternativ oder zusätzlich: kombinierte Messungen, alternativ oder zusätzlich: Radarmessungen) und/oder Messungen von Ausbreitungsparametern der Radiowellen:

2.) eine Datenbank und/oder ein operationelles Datenbanknetz in dem externe, nicht-ionosphärische Messdaten gespeichert sind (MD-SG): Daten zur Charakterisierung solar-terrestrischer Beziehungen (z.B. solarer und geomagnetischer Aktivität)

In der weiteren Bearbeitung der Daten werden entsprechend der beschriebenen Anordnung schließlich Produkte generiert, die von einem Nutzer der Anordnung bzw. des Verfahrens direkt verwertet werden. Ist der Nutzer z.B. ein GPS-Dienst, kann er gleichzeitig auch Eingangsdaten von den eigenen GPS-Bodenstationen liefern. Dies hat den Vorteil, dass die abgeleiteten Ionosphäreninformationen den Anforderungen dieses Nutzers bestmöglich gerecht werden.
In einem allgemeineren Fall der Ausgestaltung der vorliegenden Erfindung kann zumindest eine Kenngröße beim Betrieb einer Einrichtung verwendet werden, für deren Betrieb Radiowellen eingesetzt werden, die sich in der Atmosphäre oder in dem Teil der Atmosphäre ausbreiten.
Insbesondere kann die Einrichtung Teil eines satellitengestützten globalen Positionsbestimmungssystems sein, wobei unter Berücksichtigung der Kenngröße entschieden wird, dass Signale bestimmter Satelliten des Systems nicht genutzt werden, eingeschränkt genutzt werden oder korrigiert werden. Wird beispielsweise festgestellt, dass ein bestimmtes Teilgebiet der Ionosphäre gestört ist, und würden die Signale des bestimmten Satelliten auf ihrem Weg zu einem Empfänger dieses Teilgebiet durchqueren, kann entschieden werden, dass die Signale dieses Satelliten in der Positionsbestimmung unberücksichtigt bleiben und stattdessen die ungestörten Signale eines oder mehrerer anderer Satelliten berücksichtigt werden., Z. B. würden letztere Signale während des normalen konventionellen Betriebes eines GPS-Empfängers nicht berücksichtigt, da seine geometrische Konfiguration für die Positionsbestimmung ungünstiger ist als die Position des ausgeschlossenen Satelliten.
Anwendungen der ermittelten Kenngrößen können, wie erwähnt, im Bereich der satellitengestützten Navigation liegen. In der Kommunikation können die Kenngrößen z. B. in Vorhersagemodellen für die Radiowellenausbreitung (Funkprognose) und/oder für die Kontrolle der Qualität und Stabilität von Faktoren, die Kommunikationsverbindungen beinträchtigen, genutzt werden. In der Navigation können die Kenngrößen z. B. dazu verwendet werden, Abschätzungen des ionosphärischen Fehler- und Störungspotentials in satellitengestützten globalen Navigationssatellitensystemen (GNSS) wie z.B. GPS und Galileo zu erhalten. Außerdem können die Kenngrößen ein effektives Maß des ionosphärischen Störungsgrades in differentiellen GNSS-Anwendungen liefern und können daher wichtiger Bestandteil einer Integritätsinformation z.B. für Galileo sein. Dies ist von Bedeutung für hochgenaue und sicherheitskritische Anwendungen. Außerdem können die Kenngrößen für die Vorhersage ionosphärisch bedingter Störungen der Positionsbestimmung genutzt werden und sind somit ebenfalls für hochgenaue und sicherheitskritische Anwendungen von Bedeutung.
Im Folgenden wird nun ein bevorzugtes Ausführungsbeispiel eines Modells für die Datenassimilation beschrieben, wobei das Modell als Regionales TEC-Modell bezeichnet werden kann. Prinzipiell sind natürlich auch beliebige andere ein- bis dreidimensionale Modelle wählbar, sofern eine modellgestützte Rekonstruktion der Kenngrößen bevorzugt wird. Ist das Modell ein Vorhersagemodell, liefert die Datenassimilation eine Prognose des zukünftigen Verhaltens der Ionisation oder der Kenngrößen.
Das Modell der Ionosphäre ermöglicht es, den Gesamtelektroneninhalt (Total Electron Content, TEC) über der europäischen Region (20°West $< \lambda <$ 40°Ost; 30°Nord $< \phi <$ 70°Nord) zu berechnen. Es wurde entwickelt, um als Hintergrundmodell für die Erzeugung einer TEC-Karte zu dienen (vergleiche: Jakowski et al., 1994, 1996, 1998, siehe unten). Die TEC-Karten werden erzeugt, indem TEC Messungen von bodengestützten GPS-Messungen in ein Hintergrundmodell wie das NTCM assimiliert werden. Hierbei werden die in der Regel auf einem schräg einfallenden Strahlenweg am Empfänger gemessenen TEC-Werte auf eine vertikale TEC transformiert (Normierung).
Das Modell nähert Änderungen des vertikalen TEC abhängig von den Eingangsgrößen Ort, Zeit und solarer Aktivität an und basiert auf einem Satz von jährlich aktualisierten Koeffizienten, die aus Messungen des IGS-Netzes abgeleitet werden. Das Modell selbst ist ein Polynom mit 60 Koeffizienten:

$$TEC = \sum_{i=1}^{5} \sum_{j=1}^{3} \sum_{k=1}^{2} \sum_{l=1}^{2} H_i(h) \quad Y_j(d) \quad L_k(\phi, \lambda, h, d) \quad S_l(F10)$$

wobei $H_i(h)$ die tägliche und halb-tägliche Variation, $Y_j(d)$ die jährliche und halbjährliche Variation, $L_k(\phi,\lambda,h,d)$ die Abhängigkeit von dem solaren Zenitwinkel und magnetischen Breite und $S_l(F10)$ die Abhängigkeit von der solaren Aktivität beschreiben.

Um polare Gebiete (hier $\phi > 50°$Nord, $\phi > 50°$Süd) abzudecken, ist ein polares TEC-Modell (NTCMP) entwickelt worden. Dieses Modell, das dem NTCM sehr ähnlich ist, wird als ein Hintergrundmodell für die Erzeugung von polaren TEC-Karten verwendet.

Die Standardabweichung hinsichtlich monatlicher Medianwerte ist kleiner als 3,5 TECU bei hoher solarer Aktivität und kleiner als 1,5 TECU bei niedriger solarer Aktivität in den betrachteten Gebieten.

Die Grundzüge der hier verwendeten Datenassimilation sind beschrieben bei Jakowski, 1998 (s. unten). Insbesondere auf den Inhalt der beiden im Jahr 1998 veröffentlichten Beiträge wird hiermit Bezug genommen.

Literatur:

Jakowskl, N., Jungstand, A., Modelling the regional Ionosphere by uslng GPS observations, Proceedings of the International Beacon Satellite Symposium, Bberystwyth (UK), 11.-15. July 1994

Jakowski, N., TECMonitoring by Using Satellite Positioning Systems, in Modern Ionospheric Science, (Eds. H.Kohl, R. Rüster, K. Schlegel), EGS, Katlenburg-Lindau, ProduServ GmbH Verlagsservice, Berlin, pp. 371-390, 1996. Anmerkung: diese Veröffentlichung beschreibt eine bevorzugte Möglichkeit der Bestimmung von Werten des Ionisationszustandes der Atmosphäre.

Jakowski, N., Sardon, E., Schlüter, S., GPS-Based TEC Observations in Comparison with IR195 and the European TEC Model NTCM2, Adv. in Space Res., 22, 803-606, 1998.

Jakowski, N., Generation of TEC Maps Over the COST Area Based on GPS Measurements, Proc. 2nd COST251 Workshop, (Ed. A. Vernon), 30-31 March, 1998, Side, pp 51-57, 1998.

**Patentansprüche**

1.  Verfahren zur Charakterisierung eines Zustandes einer Planeten-Atmosphäre, oder eines Teils der Atmosphäre, insbesondere der Ionosphäre der Erde, wobei

    - Werte eines Ionisationszustandes, insbesondere einer Elektronendichte und/oder eines Elektroneninhaltes, in der Atmosphäre oder in dem Teil der Atmosphäre in Abhängigkeit einer Ortsvariablen und in Abhängigkeit einer Zeitvariablen ermittelt werden (MD-Ion, PL, PR, PG, DA),
    - für die Atmosphäre oder den Teil der Atmosphäre zumindest eine Kenngröße ermittelt wird (DR), wobei die Kenngröße eine etwaig vorliegende Störung von Funkwellen charakterisiert und
    - die Kenngröße aus den für die Atmosphäre oder den Teil der Atmosphäre ermittelten Werten des Ionisationszustandes bestimmt wird (DR), **dadurch gekennzeichnet dass**
    die Kenngröße eine der folgend aufgelisteten Größen aufweist: räumliche und/oder zeitliche Ableitungen einer physikalischen Zustandsgröße der Atmosphäre, insbesondere der Elektronendichte und/oder des Elektroneninhalts, Abweichung, insbesondere Standardabweichung, von einem Mittelwert oder Referenzwert einer Zustandsgröße der Atmosphäre.

2.  Verfahren nach dem vorhergehenden Anspruch, wobei ein Wert der Kenngröße bestimmt wird, der zu einem Zeitpunkt oder in einem Zeitraum charakteristisch für den Zustand in der gesamten Atmosphäre oder in dem gesamten Teil der Atmosphäre ist (DR).

3.  Verfahren nach einem der vorhergehenden Ansprüche, wobei aus den ermittelten Werten des Ionisationszustandes für einen in der Zukunft liegenden Zeitpunkt oder Zeitraum die Kenngröße vorausgesagt wird.

4.  Verfahren nach dem vorhergehenden Anspruch, wobei die Kenngröße durch Auswertung der räumlichen Ableitungen bestimmt wird und wobei die räumlichen Ableitungen Gradienten in Richtung der geografischen Breite und/oder der geografischen Länge des Planeten sind (DR).

5.  Verfahren nach einem der vorhergehenden Ansprüche, wobei bei der Bestimmung der zumindest einen Kenngröße Kenntnisse über ein räumliches und/oder zeitliches Verhalten der Atmosphäre verwendet werden (PL, PR, PG, DA).

6. Verfahren nach dem vorhergehenden Anspruch, wobei bei der Ermittlung der Werte des Ionisationszustandes ein physikalisches Modell verwendet wird, das den Elektroneninhalt oder die Elektronendichte in der Atmosphäre oder in dem Teil der Atmosphäre beschreibt, und wobei das Modell eine räumliche und zeitliche Diskretisierung der Atmosphären oder des Teils der Atmosphäre nutzt, insbesondere ein Gitterpunktnetz aufweisen, wobei diskreten Orten oder Teilvolumina des Modells jeweils ein Ort oder Volumenbereich in der Atmosphäre oder in dem Teil der Atmosphäre entspricht und wobei den Orten oder Teilvolumina jeweils ein aktueller oder zukünftiger Wert einer mit Hilfe des Modells rekonstruierten Größe, z. B. der Elektronendichte oder des Elektroneninhalts, zugeordnet ist.

7. Verfahren nach einem der vorhergehenden Ansprüche, wobei die Elektronendichte oder der Elektroneninhalt durch Auswertung von Radiowellen, insbesondere einer Laufzeit von Radiowellen und/oder Phase von Trägerwellen, bestimmt wird.

8. Verfahren nach dem vorhergehenden Anspruch, wobei Radiowellen in einem satellitengestützten globalen Positionsbestimmungssystem ausgewertet werden.

9. Verfahren nach einem der vorhergehenden Ansprüche, wobei die zumindest eine Kenngröße beim Betrieb einer Einrichtung verwendet wird, für deren Betrieb elektromagnetische Wellen eingesetzt werden, die sich in der Atmosphäre oder in dem Teil der Atmosphäre ausbreiten.

10. Verfahren nach dem vorhergehenden Anspruch, wobei die Einrichtung Teil eines satellitengestützten Positionsbestimmungssystems ist oder in Kombination mit einem solchen Positionsbestimmungssystem verwendet wird und wobei unter Berücksichtigung der Kenngröße entschieden wird, dass Signale bestimmter Satelliten des Systems nicht genutzt werden oder eingeschränkt genutzt werden.

11. Anordnung zur Charakterisierung eines Zustandes einer Planeten-Atmosphäre, oder eines Teils der Atmosphäre, insbesondere der Ionosphäre der Erde, wobei die Anordnung Folgendes aufweist:

- eine Zustands-Ermittlungseinrichtung (MD-Ion, PL, PR, PG, DA), die ausgestaltet ist, Werte eines Ionisationszustandes, insbesondere einer Elektronendichte und/oder eines Elektroneninhaltes, in der Atmosphäre oder in dem Teil der Atmosphäre in Abhängigkeit einer Ortsvariablen und in Abhängigkeit einer Zeitvariablen zu ermitteln,
- eine Kenngrößen-Bestimmungseinrichtung (DR), die ausgestaltet ist, für die Atmosphäre oder den Teil der Atmosphäre zumindest eine Kenngröße zu bestimmen, wobei die Kenngröße eine etwaig vorliegende Störung von Funkwellen charakterisiert,
wobei die Kenngröße aus den für die Atmosphäre oder den Teil der Atmosphäre ermittelten Werten des Ionisationszustandes bestimmt wird und **dadurch gekennzeichnet dass**
die Kenngröße eine der folgend aufgelisteten Größen aufweist: räumliche und/oder zeitliche Ableitungen einer physikalischen Zustandsgröße der Atmosphäre, insbesondere der Elektronendichte und/oder des Elektroneninhalts, Abweichung, insbesondere Standardabweichung, von einem Mittelwert oder Referenzwert einer Zustandsgröße der Atmosphäre.

12. Anordnung nach dem vorhergehenden Anspruch, wobei die Anordnung ausgestaltet ist, die Kenngröße beim Betrieb einer Einrichtung zu verwenden, für deren Betrieb elektromagnetische Wellen eingesetzt werden, die sich in der Atmosphäre oder in dem Teil der Atmosphäre ausbreiten, wobei die Einrichtung Teil eines satellitengestützten Positionsbestimmungssystems ist oder in Kombination mit einem solchen Positionsbestimmungssystem verwendet wird und die Anordnung ausgestaltet ist, unter Berücksichtigung der Kenngröße zu entschieden, dass Signale bestimmter Satelliten des Systems nicht genutzt werden oder eingeschränkt genutzt werden.

**Claims**

1. A method for characterizing a state of a planetary atmosphere, or of a part of the atmosphere, in particular of the ionosphere of the earth,

- values of an ionization state, in particular of an electron density and/or of an electron content, in the atmosphere or in the part of the atmosphere being ascertained as a function of a location variable and as a function of a time variable (MD-ion, PL, PR, PG, DA),
- at least one characteristic quantity being ascertained for the atmosphere or the part of the atmosphere (DR), the characteristic quantity characterizing a potentially present disturbance of radio waves, and
- the characteristic quantity being determined from the values of the ionization state ascertained for the atmosphere or the part of the atmosphere (DR),
**characterized in that** the
characteristic quantity comprises one of the quantities listed hereafter: spatial and/or time derivatives of a physical state quantity of the atmosphere, in particular the electron density and/or the electron content, deviation, in particular standard deviation, from an average value or reference value of a state quantity of the atmosphere.

2.  The method according to the preceding claim, wherein a value of the characteristic quantity is determined, which at a point in time or during a time period is characteristic of the state of the entire atmosphere or in the entire part of the atmosphere (DR).

3.  The method according to one of the preceding claims, wherein the ascertained values of the ionization state are used to predict the characteristic quantity for a point in time or time period in the future.

4.  The method according to the preceding claim, wherein the characteristic quantity is determined by evaluating the spatial derivatives, and the spatial derivatives are gradients in the direction of the geographical latitude and/or geographical longitude of the planet (DR).

5.  The method according to one of the preceding claims, wherein knowledge about a spatial and/or time behavior of the atmosphere is used in the determination of the at least one characteristic quantity (PL, PR, PG, DA).

6.  The method according to the preceding claim, wherein, in the ascertainment of the values of the ionization state, a physical model is used that describes the electron content or the electron density in the atmosphere or in the part of the atmosphere, and the model employs a spatial and temporal discretization of the atmosphere or the part of the atmosphere, using in particular a grid point network, wherein a respective location or volume area in the atmosphere or in the part of the atmosphere each corresponds to discrete locations or partial volumes of the model, and a current or future value of a quantity reconstructed with the aid of the model is assigned each to the locations or partial volumes, such as the electron density or the electron content.

7.  The method according to one of the preceding claims, wherein the electron density or the electron content is determined by evaluating radio waves, in particular a propagation time of radio waves and/or phase of carrier waves.

8.  The method according to the preceding claim, wherein radio waves are evaluated in a satellite-based global positioning system.

9.  The method according to one of the preceding claims, wherein the at least one characteristic quantity is used in the operation of a device operating based on electromagnetic waves which propagate in the atmosphere or in the part of the atmosphere.

10. The method according to the preceding claim, wherein the device is part of a satellite-based positioning system, or is used in combination with such a positioning system, and it is decided, taking the characteristic quantity into consideration, not to use signals of certain satellites of the system or to use these signals to a limited extent.

11. An arrangement for characterizing a state of a planetary atmosphere, or a part of the atmosphere, in particular of the ionosphere of the earth, the arrangemet comprising the following:

    - a state ascertainment device (MD-ion, PL, PR, PG, DA), which is configured to ascertain values of an ionization state, in particular of an electron density and/or of an electron content, in the atmosphere or in the part of the atmosphere as a function of a location variable and as a function of a time variable;
    - a characteristic quantity determination device (DR), which is configured to determine at least one characteristic quantity for the atmosphere or the part of the atmosphere, the characteristic quantity characterizing a potentially present disturbance of radio waves, the characteristic quantity being determined from the values of the ionization state ascertained for the atmosphere or the part of the atmosphere,
    **characterized in that** the
    characteristic quantity includes one of the quantities listed hereafter: spatial and/or time derivatives of a physical state quantity of the atmosphere, in particular the electron density and/or the electron content, deviation, in particular standard deviation, from an average value or reference value of a state variable of the atmosphere.

**12.** The arrangement according to the preceding claim, wherein the arrangement is configured to use the characteristic quantity in the operation of a device operating based on electromagnetic waves which propagate in the atmosphere or in the part of the atmosphere, the device being part of a satellite-based positioning system, or being used in combination with such a positioning system, and the system being configured to decide, taking the characteristic quantity into consideration, not to use signals of certain satellites of the system or to use these signals to a limited extent.

**Revendications**

**1.** Procédé servant à caractériser un état d'une atmosphère de planète, ou une partie de l'atmosphère, en particulier de l'ionosphère de la Terre, dans lequel

- des valeurs d'un état d'ionisation, en particulier d'une densité d'électrons et/ou d'un contenu d'électrons, dans l'atmosphère ou dans la partie de l'atmosphère sont déterminées en fonction d'une variable en matière d'endroit et en fonction d'une variable en matière de temps (MD-ion, PL, PR, PG, DA),
- au moins une grandeur caractéristique est déterminée pour l'atmosphère ou pour la partie de l'atmosphère (DR), dans lequel la grandeur caractéristique caractérise la présence éventuelle d'une perturbation d'ondes radio et
- la grandeur caractéristique est définie à partir des valeurs, déterminées pour l'atmosphère ou pour la partie de l'atmosphère, de l'état d'ionisation (DR),
**caractérisé en ce que** la
grandeur caractéristique présente une des grandeurs listées ci-après : des dérivées spatiales et/ou temporelles d'une grandeur d'état physique de l'atmosphère, en particulier de la densité d'électrons et/ou du contenu d'électrons, l'écart, en particulier l'écart standard, d'une valeur moyenne ou d'une valeur de référence d'une grandeur d'état de l'atmosphère.

**2.** Procédé selon la revendication précédente, dans lequel une valeur de la grandeur caractéristique est définie, laquelle est, à un moment donné ou pour une durée donnée, caractéristique de l'état dans l'ensemble de l'atmosphère ou dans l'ensemble de la partie de l'atmosphère (DR).

**3.** Procédé selon l'une quelconque des revendications précédentes, dans lequel la grandeur caractéristique est anticipée à partir des valeurs déterminées de l'état d'ionisation pour un moment ou une durée situé(e) dans le futur.

**4.** Procédé selon la revendication précédente, dans lequel la grandeur caractéristique est définie par analyse des dérivées spatiales et dans lequel les dérivées spatiales sont des gradients en direction de la largeur géographique et/ou de la longueur géographique de la planète (DR).

**5.** Procédé selon l'une quelconque des revendications précédentes, dans lequel sont utilisées, lors de la définition de l'au moins une grandeur caractéristique, des connaissances portant sur un comportement spatial et/ou temporel de l'atmosphère (PL, PR, PG, DA).

**6.** Procédé selon la revendication précédente, dans lequel est utilisé, lors de la détermination des valeurs de l'état d'ionisation, un modèle physique, qui décrit le contenu des électrons ou la densité des électrons dans l'atmosphère ou dans la partie de l'atmosphère, et dans lequel le modèle exploite une discrétisation spatiale et temporelle de l'atmosphère ou de la partie de l'atmosphère, présente en particulier un réseau de points réticulaires, dans lequel respectivement un endroit ou une zone volumique dans l'atmosphère ou dans la partie de l'atmosphère correspond à des endroits ou à des volumes partiels discrets du modèle et dans lequel respectivement une valeur instantanée ou future d'une grandeur reconstruite à l'aide du modèle, par exemple de la densité des électrons ou du contenu des électrons, est associée aux endroits ou aux volumes partiels.

**7.** Procédé selon l'une quelconque des revendications précédentes, dans lequel la densité des électrons ou le contenu des électrons est défini(e) par l'analyse des ondes radio, en particulier par un temps de propagation des ondes radio et/ou d'une phase des ondes porteuses.

**8.** Procédé selon la revendication précédente, dans lequel des ondes radio sont analysées dans un système de définition de position global assisté par des satellites.

**9.** Procédé selon l'une quelconque des revendications précédentes, dans lequel l'au moins une grandeur caractéristique est utilisée lors du fonctionnement d'un dispositif, pour le fonctionnement duquel des ondes électromagnétiques sont employées, lesquelles se propagent dans l'atmosphère ou dans la partie de l'atmosphère.

**10.** Procédé selon la revendication précédente, dans lequel le dispositif fait partie d'un système de définition de position assisté par des satellites ou est utilisé en combinaison avec un système de définition de position de ce type et dans lequel on décide, en tenant compte de la grandeur caractéristique, si des signaux de satellites définis du système ne sont pas exploités ou sont exploités de manière restreinte.

**11.** Ensemble servant à caractériser un état d'une atmosphère de planète, ou d'une partie de l'atmosphère, en particulier de l'ionosphère de la Terre, dans lequel l'ensemble présente ce qui suit :

- un dispositif de détermination d'état (MD-ion, PL, PR, PG, DA), qui est configuré afin de déterminer des valeurs d'un état d'ionisation, en particulier d'une densité d'électrons et/ou d'un contenu d'électrons, dans l'atmosphère ou dans la partie de l'atmosphère en fonction d'une variable en matière d'endroit et en fonction d'une variable en matière de temps,
- un dispositif de définition de grandeurs caractéristiques (DR), qui est configuré afin de définir, pour l'atmosphère ou pour la partie de l'atmosphère, au moins une grandeur caractéristique, dans lequel la grandeur caractéristique caractérise la présence éventuelle d'une perturbation des ondes radio,
dans lequel la grandeur caractéristique est définie à partir des valeurs, déterminées pour l'atmosphère ou la partie de l'atmosphère, de l'état d'ionisation, et **caractérisé en ce que** la
grandeur caractéristique présente une des grandeurs caractéristiques listées ci-après : des dérivées spatiales et/ou temporelles d'une grandeur d'état physique de l'atmosphère, en particulier de la densité d'électrons et/ou du contenu d'électrons, l'écart, en particulier l'écart standard, d'une valeur moyenne ou d'une valeur de référence d'une grandeur d'état de l'atmosphère.

**12.** Ensemble selon la revendication précédente, dans lequel l'ensemble est configuré afin d'utiliser la grandeur caractéristique lors du fonctionnement d'un dispositif, pour le fonctionnement duquel des ondes électromagnétiques sont employées, lesquelles se propagent dans l'atmosphère ou dans la partie de l'atmosphère, dans lequel le dispositif fait partie d'un système de définition de position assisté par satellites ou est utilisé en combinaison avec un système de définition de position de ce type et l'ensemble est configuré pour décider en tenant compte de la grandeur caractéristique si des signaux de satellites définis du système ne sont pas exploités ou sont exploités de manière restreinte.

Fig.1

**Ergebnis der räumlichen Rekonstruktion oder Messung**

| Lokal | Regional | Global |
|---|---|---|

Zeitlicher Parameter p $\delta p/\delta t$

Mittelwerte, Medians

Räumlicher Parameter p $\delta p/\delta x$ $\delta p/\delta y$ $\delta p/\delta z$

Mittelwerte, Medians

Fig. 2

EP 1 643 263 B1

Fig.3

F 10

Kp

RMS

dTEC/dΦ

dTEC/dλ

Perturbationsparameter [a.u.]

Tag im Monat

EP 1 643 263 B1

Fig.4

DLR/IKN

# Fig.5A

Dreistündliche Intervalle, 21.-31.Oktober 2003

# Fig.5B

North Pole

North Pole

17.-31. Dezember 2003

Dreistündliche Intervalle, 17.-31. Dezember 2003

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5428358 A
- US 5828336 A

**In der Beschreibung aufgeführte Nicht-Patentliteratur**

- Ionospheric corrections from a prototype operational assimilation and forecast system. **KHATTATOV B et al.** Position Location and Navigation, Symposium. IEEE, 2004, 518-526
- **JAKOWSKL, N. ; JUNGSTAND, A.** Modelling the regional Ionosphere by uslng GPS observations. *Proceedings of the International Beacon Satellite Symposium,* 11. Juli 1994
- **JAKOWSKI, N.** TECMonitoring by Using Satellite Positioning Systems, in Modern Ionospheric Science. ProduServ GmbH Verlagsservice, 371-390
- **JAKOWSKI, N. ; SARDON, E. ; SCHLÜTER, S.** GPS-Based TEC Observations in Comparison with IR195 and the European TEC Model NTCM2. *Adv. in Space Res.,* 1998, vol. 22, 803-606
- Generation of TEC Maps Over the COST Area Based on GPS Measurements. **JAKOWSKI, N.** Proc. 2nd COST251 Workshop. 1998, 51-57